Europäisches Patentamt

European Patent Office

Office européen des brevets

(19)

(11) Publication number: 0 144 432
A1

(12) **EUROPEAN PATENT APPLICATION**

published in accordance with Art. 158(3) EPC

(21) Application number: 84901404.8

(22) Date of filing: 30.03.84

Data of the international application taken as a basis:

(86) International application number:
PCT/JP84/00154

(87) International publication number:
WO84/03990 (11.10.84 84/24)

(51) Int. Cl.⁴: G 11 C 9/06
G 06 F 13/00

(30) Priority: 31.03.83 JP 56472/83

(43) Date of publication of application:
19.06.85 Bulletin 85/25

(84) Designated Contracting States:
DE FR GB

(71) Applicant: FANUC LTD
3580, Shibokusa Aza-Komanba
Oshino-mura, Minamitsuru-gun Yamanashi
Prefecture(JP)

(72) Inventor: SAKAKIBARA, Shinsuke
Mezon-Izumi 101 1-23-3, Higashi Izumi Komae-shi
Tokyo 201(JP)

(72) Inventor: TACHIBANA, Mitsuo
Fuji-Haimu 202 3-23-1, Shinmei
Hino-shi Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) **MEMORY READOUT CONTROL SYSTEM.**

(57) A high-speed memory (4) is constructed so that it is provided with at least a first data-storage region (4a) which is accessed by a processor (1) and a second data-storage region (4b) into which data in a low-speed memory (5) is transferred and stored. The processor (1) reads data out of the first data-storage region (4a) of the high-speed memory (4), then transfers the data in the second data-storage region (4b) of the high-speed memory (4) into the first data-storage region (4a), and also accesses the low-speed memory (5) to transfer data therein into the second data-storage region (4b) of the high-speed memory, so that the processor can continuously read out data regardless of any access to the low-speed memory.

EP 0 144 432 A1

./...

# Fig.5

TITLE MODIFIED
see front page

TITLE OF THE INVENTION

MEMORY READ CONTROL SYSTEM

BACKGROUND OF THE INVENTION

The present invention relates to a memory pre-read control system for use in a controller composed of a computer and, more particularly, to a memory read control system which is enabled to attain data irrespective of the access time of a slow time such as a magnetic bubble memory when the data are required by a processor.

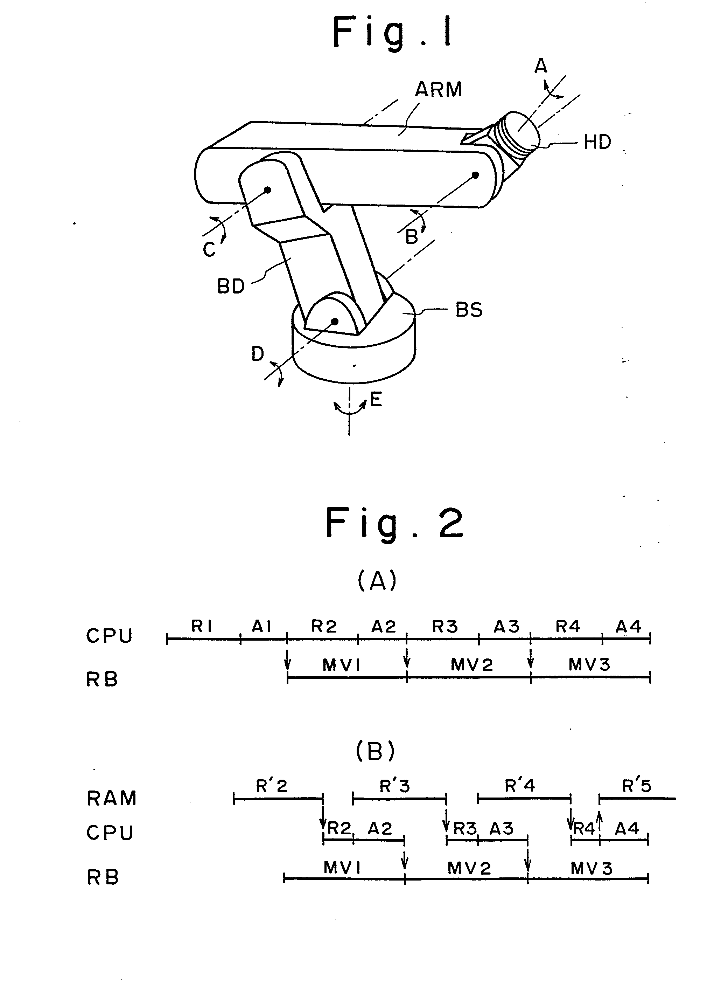

In accordance with development of the numerical control technique, a variety of machines are numerically controlled. In recent years, an industrial robot is also numerically controlled so that its operation may be improved. Fig. 1 is a view of the construction of a general industrial robot and shows an articulated type robot having five operation axes. As shown: letters BS indicate a base which can swivel on an axis E; letters BD indicate a body which can swing on an axis D with respect to said base BS; letters ARM indicate an arm which can swing on an axis C with respect to said base BS; and letters HD indicate a hand which can swing on an axis B with respect to said arm ARM and which can also rotate on its own axis A. Thus, the shown robot has articulations of five axes which are composed of three basic ones and two hand ones and which are numerically controlled to control the position and moving velocity of the hand HD so that desired works may be performed. In dependence upon the kinds of working members to be attached to the hand HD such as hand torches, however, the works become different in their kinds and accordingly in their controls.

For these controls, the stored program type numerical controller is used. This controller has its memory stored in advance with control data and has its numerical control data read out sequentially in accordance with the advance of the control to process the numerical controls in conformity with a command. As this memory, there has been used in the prior art a C-MOS or RAM. However, these memories have defects that they are expensive and that a backup power supply is required for storage of information. Now, a magnetic bubble memory has recently been put into practice. This magnetic bubble memory has merits that they are very inexpensive for their nonvalatility and large storage capacity and that they require no backup power supply for holding the information. Because of these merits, the magnetic bubble memory has been adopted in the numerical controller. With the merits of the nonvolatility, large storage capacity and low cost, however, the magnetic bubble memory has a defect that its access time is relatively long. In the magnetic bubble memory, specifically, the stored content is read/written at a unit of one page (i.e., 64 bytes), but the access time is so relatively long as

- 3 -

about 20 msec/page.

As a result, the numerical controller having its magnetic bubble memories stored with a plurality of control data is encountered by a trouble that the control of a machine such as the robot is interrupted because it takes long to read out predetermined control data addressed. As shown in Fig. 2(A), more specifically, the processor of the numerical controller is made operative to read out control data from a bubble memory (as for R1), to conduct a numerical arithmetic (as for A1) thereby to send a moving command to the robot, to read out subsequent control data (as for R2) while the robot is conducting a moving action MV1, and to process a numerical arithmetic (as for A2) so that the control of the robot may not be interrupted. However, the read time periods R1, R2 and so on are determined determined by the access time of the memory and are fixed, and the arithmetic processing periods A1, A2 and so on are determined by the number of steps. As a result, for a short moving action period MV1, a subsequent moving command is not in time so that the control of the machine such as the robot is interrupted. Therefore, the technique of advanced read is used in the prior art. As shown in Fig. 2(B), more specifically, this technique is enabled to read at a high speed by reading in advance control data the previous page in a fast access memory from a bubble memory (as for R'2) and by reading control data of subsequent page from the fast access memory by a processor (as for R2). Then, the processor processes the numerical arithmetic (as for A2) to generate a moving command. Since the read period may be short, therefore, the processor can conduct the reading action (for R2) and the numerical arithmetic processing (for A2) within the moving action period. Moreover, the data transfer from the bubble memory to the fast memory applies no load upon the processor, because it can be executed independently of the processings of the processor if the direct memory access technique.

In the advanced read system thus far described, however, the period for the transfer from the bubble memory to the fast memory is required to be within the moving period of the machine. If this moving period is further shortened, therefore, the advanced read system is encountered by a defect that the transfer fails to be in time so that the interruption of the control is likewise caused. Especially, in the case of the control of the robot, the more control data are required as the robot control is made the more complicated. In case the movement is made along an arc, for example, a very short stroke is set for the movement of one point so that the moving period is accordingly shortened. Improvements in this point have been desired.

## SUMMARY OF THE INVENTION

Therefore, an object of the present invention is

- 5 -

to provide a memory read control system which prevents
a processor from having its machine control interrupted
even in case the machine has a very short moving
period.

According to the present invention, there is
provided a memory read control system of the type, in
which data of a slow memory are read in advance in a
fast memory so that a processor read out the data read
in said fast memory to execute its arithmetic
processings, which system comprises a fast memory
including at least a first data storage area to be read
and accessed by said processor and a second data
storage area to have the data of said slow memory
transferred thereto and to be stored with the same,
wherein the improvement resides in that said processor
is made operative to read out the data stored in the
first data storage area of said fast memory, to
transfer the data of the second data storage area of
said fast memory to the first data storage area after
the end of said reading operation, and to access said
slow memory thereby to read the data of said slow
memory in the second data storage area of said fast
memory.

According to the present invention, specifically,
the memory pre-read control system is equipped with a
fast memory, which includes at least a first data
storage area for data transfer to a processor and a
second data storage area for storing the data transferred from a slow memory, so that the read of the processor and the access to the slow memory may be conducted independently of each other. This results in an effect that the processor is enabled to continuously read the data without any consciousness of the access time to the slow memory. Even the use of this slow memory for the data storage would not interrupt the control of an object. According to the present invention, moreover, the data having been transferred from the slow memory to the second data storage area of the fast memory are automatically transferred to the first data storage area. This results in another effect that the processor is enabled to attain necessary data merely by accessing the first data storage area of the fast memory without consciousness of which data storage area of the fast memory is stored with subsequent data. As a result, the number of processing steps of the processor is not augmented even with the provision of a plurality of buffer areas so that the access can be accelerated the faster. According to the present invention, still moreover, the fast memory is equipped with the second data storage area for storing the data transferred from the slow memory, and the data from the slow memory are stored in a fixed position in the fast memory. This results in still another but practically excellent effect that spare buffers need not be assigned to the access of that slow memory while a fast access being made possible.

## BRIEF DESCRIPTION OF THE DRAWINGS

Fig. 1 is a view showing the construction of the industrial robot;

Fig. 2 is a diagram explaining the memory read control system of the prior art;

Figs. 3 and 4 are diagrams explaining the principle of the present invention; and

Fig. 5 is a block diagram of one embodiment for realizing the present invention.

## DESCRIPTION OF THE PREFERRED EMBODIMENT

The present invention will be described in the following in connection with the embodiment thereof with reference to the accompanying drawings so that it may be detailed.

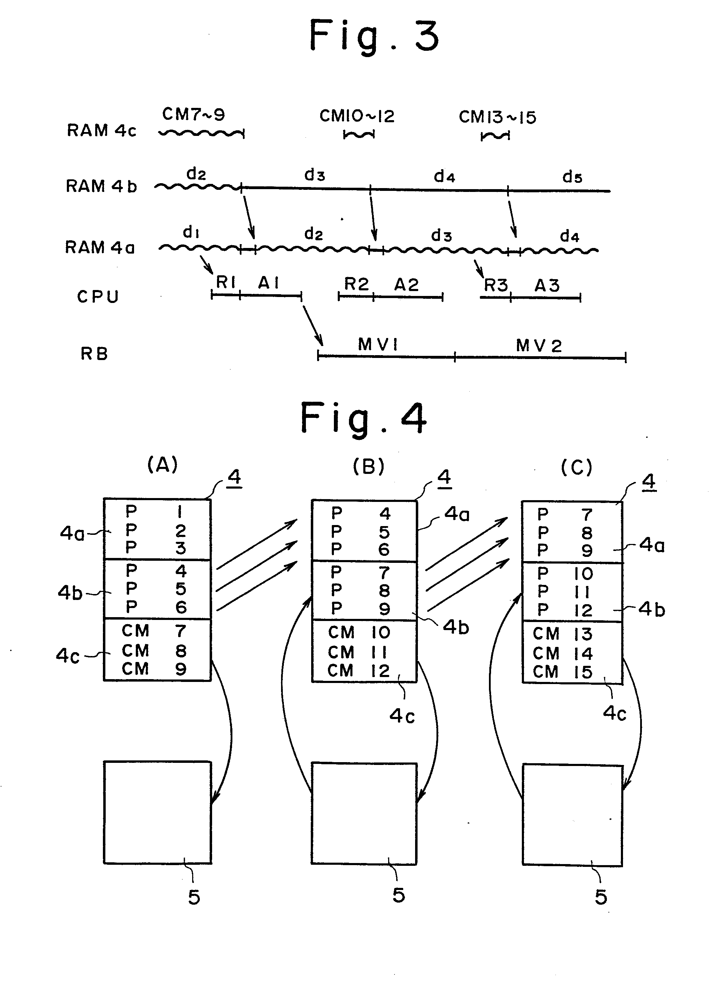

Figs. 3 and 4 are diagrams explaining the principle of the present invention.

In the present invention, a fast memory (RAM) 4 is provided, as shown in Fig. 4(A), with DMA areas 4a and 4b for two pages, and a DMA area 4c for a read command. First of all, the control data for two pages are read out from a bubble memory 5 and set in the DMA areas 4a and 4b of said fast memory (RAM) 4, and a read command of a third page is set in the DMA area 4c for initializing the control. Since data corresponding to three points are accommodated in one page in the embodiment as shown, control data for P1 to P3 and P4 to P6 are stored in the DMA areas 4a and 4b, whereas read commands CM7, CM8 and CM9 corresponding to three points are set in the DMA area 4c. The processor read the control data P1 to P3 of the DMA area 4a in its buffer memory and acceesses the bubble memory 5 after the end of the read in response to the read commands CM7, CM8 and CM9 by a direct memory access. At the same time, the processor transfers the control data P4 to P6 of a second page from the DMA area 4b to the DMA area 4a.

While the processor is executing the afore-mentioned control data P1 to P3 thus read, the control data P7 to P9 of a third page are sequentially read out from the bubble memory on the basis of the aforementioned rear commands CM7, CM8 and CM9 and stored in the DMA area 4b, and read commands CM10, CM11 and CM12 are set in the DMA area 4c (as shown in Fig. 4(B)). After the execution of the control data P1 to P3, moreover, the processor reads again the control data P4, P5 and P6 of the area 4a of the RAM 4 in its own buffer memory and transfers the control data P7 to P9 of the third page from the DMA area 4b to the DMA area 4a after the end of the read. After this, control data P10 to P12 of a fourth page are sequentially read out from the bubble memory 5 on the basis of the read commands CM10 to CM12 and stored in the DMA area 4b, and read commands CM13 to CM15 are set in the DMA area (as shown in Fig. 4(C)).

As a result, as shown in Fig. 3, the allowance time for access to the bubble memory 5 continues from
the end of the read (R1) to the end of the read (R2) so
that it is elongated far more than that of Fig. 2(B).
Since the DMA area 4b is provided especially for the
transfer with the bubble memory 5, moreover, the
transfer can be made possible without being influenced
by the access with the processor.  Moreover, the
processor can sequentially attain the control data
merely by accessing only the DMA area 4a of the RAM 4.
As a result, the processor can conduct its reading
action without consciousness of what DMA area the
control data of a next page belong even if the DMA area
is increased.  Thus, the access to the RAM 4 and the
accesses to the RAM 4 and the bubble memory 5 by the
processor can be conducted absolutely independently of
each other.

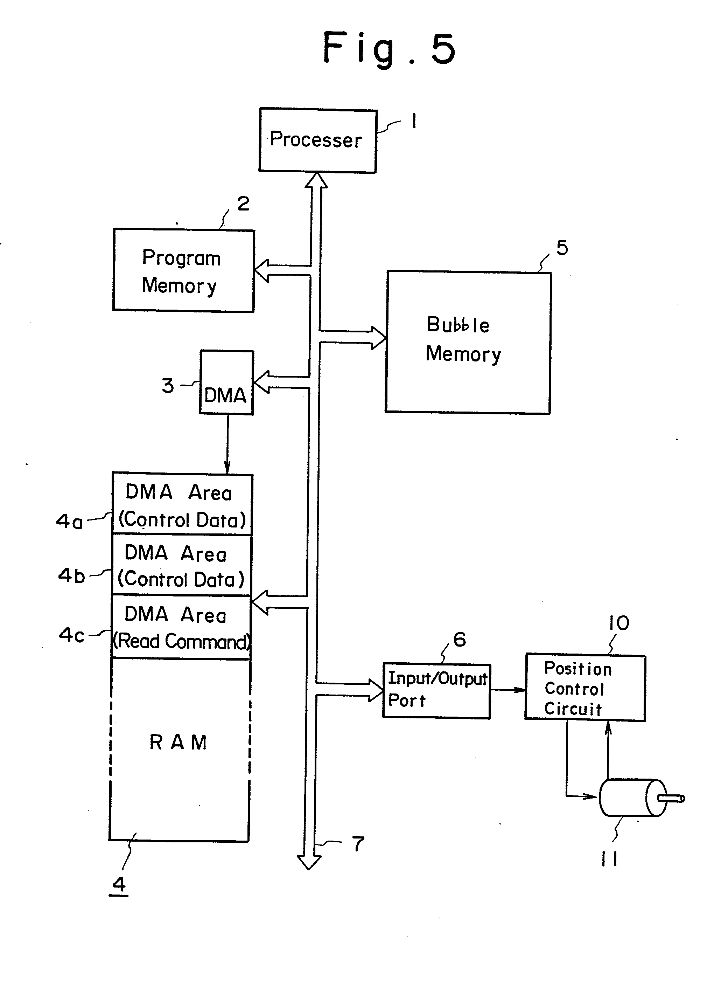

Next, the construction for realizing the present
invention will be described with reference to the block
diagram of Fig. 5.  Fig. 5 is a block diagram of one
embodiment of the present invention.  As shown, numeral
1 indicates a processor for executing the aforementioned numerical arithmetic processings in
accordance with a control program and numeral 2
indicates a program memory for storing the control
program.  Numeral 3 indicates a direct memory access
(DMA) circuit which is made operative to access a
later-described bubble memory in response to the
command of the processor 1 and to store data in a data memory; numeral 4 indicates the data memory (RAM) which is constructed of a fast random access memory for storing the arithmetic result of and the data necessary for the processor 1 and which is equipped with DMA areas 4a, 4b and 4c; and numeral 5 indicates the aforementioned bubble memory; and numeral 6 indicates an input/output port. All of the foregoing components are connected through an address data bus. Numeral 10 indicates a position control circuit which is made operative to conduct pulse distributions or the like thereby to control a motor in response to a moving command from the input/output port 6, and numeral 11 indicates the motor for driving the axis C of the robot, for example.

Next, the operations of the construction of Fig. 5 will be described.

First, the processor 1 reads out the control data corresponding to the two pages from the bubble memory 5, as has been described hereinbefore, and stores them in the DMA areas 4a and 4b of the RAM 4. For these operations, the processor 1 sets the read command of the first page in the DMA area 4c of the RAM 4 through the bus 7, starts the DMA circuit 3, and accesses the bubble memory 5 through the bus 7 in response to the command of the DMA area 4c thereby to transfer the read data (the control data of the first page) of the bubble memory 5 to the DMA area 4b of the RAM 4 and to store them in the same area. After the end of this transfer, the processor 1 transfers the control data stored in the DMA area 4b to the DMA area 4a and sets the read command of a second page in the DMA area 4c to start again the DMA circuit 3 thereby to access the bubble memory 5 in response to the command of the DMA area 4c. As a result, the control data of the second page of the bubble memory 5 are transferred to and stored in the DMA area 4b of the RAM 4.

Moreover, the processor 1 sets a read command of a third page in the DMA area 4c of the RAN 4.

In this status, the processor 1 starts the control of a robot. Specifically, the processor 1 read the control data P1 to P3 of the DMA area 4a of the RAM 4 in its own buffer memory through the bus 7.

Next, after the end of reading the control data P1 to P3, the processor 1 starts the DMA circuit 3 to send a read command (of a third page) of the DMA area 4c of the RAM 4 to the bus 7 thereby to start the access of the bubble memory 5 and to transfer the control data P4 to P6 of the DMA area 4b of the RAM 4 to the DMA area 4a.

After having read the control data P1 to P3 in its own buffer memory, the processor 1 instantly uses those data to conduct the numerical arithmetic processings thereby to process the moving command.

The processor 1 sends this moving command through the bus 7 and the input/output port 6 to the position control circuit 10. This position control circuit 10 generates a distribution pulse corresponding to the moving command and sends a speed command on the basis of a position error or a difference between the number of revolutions of the motor 11 and the number of the distribution pulses in a position control loop and a current command on the basis of a difference between the velocity command and the real speed of the motor 11 in a speed control loop to control the speed and position of the motor 11.

While the processor 1 is thus processing the numerical arithmetic so that the motor 11 is operating in response to the control signal based upon the arithmetic result, the DMA circuit 3 is started to transfer the control data P7 to P9 of a third page from the bubble memory 5 to the DMA area 4b of the RAM 4 and to store them in the same area.

When the motor 11 starts its operation, moreover, the processor 1 reads the control data P4 to P6 of the DMA area 4a of the RAM 4 in its own buffer memory through the bus 7. At the same time, the processor 1 sets a read command of a fourth page in the DMA area 4c of the RAM 4.

When the processor 1 reads the control data P4 to P6, it starts the DMA circuit 3 to send the command of the fourth page from the DMA area 4c of the DAM 4 to the but 7 thereby to start the access of the bubble memory 5 and to transfer the control data P7 to P9 of the DMA area 4b of the RAM 4 to the DMA area 4a.

- 13 -

The controls thus far described are subsequently repeated in like manners so that the robot operates in a continuous manner.

In the foregoing embodiment, incidentally, the description has been made by taking up the robot as the object to be controlled.  However, the present invention can be applied to another machine.  In the embodiment, moreover, the description has been made upon the bubble memory.  However, the present invention can use a slow memory such as a floppy disk.  In the embodiment, still moreover, there has been disclosed the data memory which is equipped with the two DMA areas for storing the control data.  However, the data memory may be equipped with three or more DMA areas.  In accordance with the gist of the present invention, there can be made a variety of modification, which should not be excluded from the scope of the present invention.

As has been described hereinbefore, the memory control system according to the present invention can be applied to a variety of controllers such as a controller for a robot having complicated operations or a controller for a machining tool, because the processor is enabled to read the data continuously without consciousness of the access time to the slow memory and because even the use of the slow memory for the data storage would not cause interruption of the control of the object.

WHAT WE CLAIM IS:

1.    A memory read control system comprising: a processor; and a memory adapted to operate by the control of said processor so that data may be read out from said memory by the control of said processor,

wherein the improvement comprises: a slow memory stored with data; and a fast memory having a quicker access time than that of said slow memory and having a first data storage area to be accessed and read by said processor and at least one second data storage area which the data of said slow memory are to be transferred to and stored in, and wherein said processor is made operative to read the data, which are stored in the first data storage area of said fast memory, and, after the end of said read, to transfer the data of the second data area of said fast memory to said first data storage area and to access said slow memory thereby to read the data of said slow memory in the second data storage area of said fast memory.

2.    A memory read control system comprising: a processor; and a direct memory access circuit adapted to be controlled by said processor; and a plurality of memories so that data may be read out from said plural memories by the controls of said processor and said direct memory access circuit,

wherein the improvement comprises: a slow memory stored with data; and a fast memory having a quicker access time than that of said slow memory and having a first data storage area to be accessed and read by said processor and at least one second data storage area which the data of said slow memory are to be transferred to and stored in, and wherein said processor is made operative to read the data, which are stored in the first data storage area of said fast memory, and, after the end of said read, to transfer the data of the second data area of said fast memory to said first data storage area and to access said slow memory by the operation of said direct memory access circuit thereby to read the data of said slow memory in the second data storage area of said fast memory.

3.   A memory read control system comprising: a processor; and a direct memory access circuit adapted to be controlled by said processor; and a plurality of memories so that data may be read out from said plural memories by the controls of said processor and said direct memory access circuit,

wherein the improvement comprises: a slow memory stored with data; and a fast memory having a quicker access time than that of said slow memory and having a first data storage area to be accessed and read by said processor, at least one second data storage area which the data of said slow memory are to be transferred to and stored in and a third data storage area to be stored with a read command for reading out the data of said slow memory, and wherein said processor is made operative to read the data, which are stored in the first data storage area of said fast memory, and, after the end of said read, to transfer the data of the second data area of said fast memory to said first data storage area and to access said slow memory in response to the read command, which is stored in said third data storage area, by the operation of said direct memory access circuit thereby to read the data of said slow memory in the second data storage area of said fast memory.

4. A memory read control system according to Claim 1, 2 or 3, wherein the data stored in said slow memory are control data for a robot.

0144432

# Fig. 1

Labels: ARM, A, HD, C, B, BD, BS, D, E

# Fig. 2

## (A)

| CPU | R1 | A1 | R2 | A2 | R3 | A3 | R4 | A4 |

| RB | | | MV1 | | MV2 | | MV3 | |

## (B)

| RAM | R'2 | R'3 | R'4 | R'5 |

| CPU | | R2 | A2 | R3 | A3 | R4 | A4 |

| RB | | MV1 | | MV2 | | MV3 | |

2

# Fig. 3

RAM 4c       CM7~9          CMIO~12        CMI3~I5

RAM 4b    $d_2$        $d_3$        $d_4$        $d_5$

RAM 4a    $d_1$        $d_2$        $d_3$        $d_4$

CPU        R1  A1      R2  A2      R3  A3

RB              MVI        MV2

# Fig. 4

|  | (A) 4 | (B) 4 | (C) 4 |
|---|---|---|---|
| 4a | P  1<br>P  2<br>P  3 | P  4<br>P  5<br>P  6 | P  7<br>P  8<br>P  9 |
| 4b | P  4<br>P  5<br>P  6 | P  7<br>P  8<br>P  9 | P  10<br>P  11<br>P  12 |
| 4c | CM  7<br>CM  8<br>CM  9 | CM  10<br>CM  11<br>CM  12 | CM  13<br>CM  14<br>CM  15 |

5

3

# Fig. 5

Processer — 1

Program Memory — 2

Bubble Memory — 5

3 — DMA

DMA Area (Control Data) — 4a

DMA Area (Control Data) — 4b

DMA Area (Read Command) — 4c

RAM

4

7

Input/Output Port — 6

Position Control Circuit — 10

11

# INTERNATIONAL SEARCH REPORT

International Application No. PCT/JP84/00154  0144432

## I. CLASSIFICATION OF SUBJECT MATTER (if several classification symbols apply, indicate all) [3]

According to International Patent Classification (IPC) or to both National Classification and IPC

Int. Cl$^3$  G11C 9/06, G06F 13/00

## II. FIELDS SEARCHED

| | Minimum Documentation Searched [4] | |
|---|---|---|
| Classification System | | Classification Symbols |
| IPC | | G11C 9/00 – 9/06, G06F 13/00, 5/06 |

Documentation Searched other than Minimum Documentation
to the Extent that such Documents are Included in the Fields Searched [5]

## III. DOCUMENTS CONSIDERED TO BE RELEVANT [14]

| Category* | Citation of Document, [16] with indication, where appropriate, of the relevant passages [17] | Relevant to Claim No [18] |
|---|---|---|
| X, Y | JP, A, 53-13325 (Mitsubishi Electric Corp.), 6 February, 1978 (06. 02. 78) | 1, 2, 3, 4 |
| Y | JP, A, 57-50380 (Mitsubishi Electric Corp.), 24 March, 1982 (24. 03. 82) | 1, 2, 3, 4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| June 15, 1984 (15.06.84) | July 2, 1984 (02.07.84) |
| International Searching Authority [1] | Signature of Authorized Officer [20] |
| Japanese Patent Office | |

Form PCT/ISA/210 (second sheet) (October 1981)